# EUROPÄISCHE PATENTSCHRIFT

(11) **EP 2 239 807 B1**
(45) Veröffentlichungstag und Bekanntmachung des Hinweises auf die Patenterteilung: **24.02.2016**
(21) Anmeldenummer: 10002849.7
(22) Anmeldetag: 18.03.2010
(51) Int. Cl.: H01M 4/88, H01M 8/04, H01M 8/12

(54) **Verfahren zur Herstellung eines Brennstoffzellenstapels**
Method for making a fuel cell stack
Procédé de fabrication d'un empilement de piles à combustible

(30) Priorität: 09.04.2009 DE 102009017190
(43) Veröffentlichungstag der Anmeldung: 13.10.2010
(73) Patentinhaber: Forschungszentrum Jülich GmbH, 52425 Jülich (DE)
(72) Erfinder: Menzler, Norbert, 52428 Jülich (DE); De Haart, Lambertus G.J., 6414 JE Heerlen (NL); Buchkremer, Hans Peter, 52525 Heinsberg (DE)

(56) Entgegenhaltungen:
- EP-A1- 1 598 892
- WO-A1-2009/105886
- WO-A2-03/026049
- DE-A1- 19 626 342
- US-A- 5 328 779

## Beschreibung

Die Erfindung betrifft ein Verfahren zur Herstellung eines Brennstoffzellenstapels, der insbesondere einen Schritt zur Qualitätskontrolle während der Herstellung einer Brennstoffzelle umfasst.

### Stand der Technik

Eine Hochtemperaturbrennstoffzelle (SOFC = Solid Oxide Fuel Cell) besteht aus einer porösen Anode, einem gasdichten, aber Sauerstoffionen leitenden Elektrolyten und einer porösen Kathode. An der Anode wird ein Brenngas, beispielsweise Wasserstoff oder Methan, zugeführt. An der Kathode wird ein Oxidationsmittel, beispielsweise Luft oder reiner Sauerstoff, zugeführt. Sauerstoffanionen aus dem Oxidationsmittel werden durch den Elektrolyten zur Anode geleitet, wo sie das Brenngas oxidieren. Dabei werden neben Wärme auch Elektronen produziert, die einen externen elektrischen Verbraucher speisen können. Da eine einzelne Brennstoffzelle nur eine geringe Spannung abgibt, wird üblicherweise eine Vielzahl von Zellen in Serie zu einem Brennstoffzellenstapel (Stack) zusammengeschaltet.

Die Betriebstemperatur eines SOFC - Stacks liegt regelmäßig im Bereich von 650 bis 1000 °C. Ein Hochtemperatur - Brennstoffzellenstapel (SOFC - Stack) mit planaren Brennstoffzellen besteht üblicherweise aus keramischen Zellen und metallischen Interkonnektoren. Die keramische Zelle ist dabei in einem metallischen Rahmen eingebaut, der wiederum mit dem Interkonnektor verbunden ist. Ein SOFC Stack besteht teilweise aus über 50 Einzelzellen.

Anode, Kathode und Elektrolyt können jeweils dünne Schichten sein, aber auch so massiv ausgelegt werden, dass sie der Brennstoffzelle ihre mechanische Stabilität geben. Man spricht dann von so genannten anoden-, kathoden- bzw. elektrolytgestützten Zellen.

Die derzeit eingesetzten Materialien für die einzelnen Zellkomponenten unterliegen einer ständigen Weiterentwicklung. Als Standardsystem wird derzeit für die Anode, die auch häufig gleichzeitig als mechanisch tragendes Substrat dient (Schichtdicke ca. 0,3 - 2 mm), ein Nihaltiges Cermet, insbesondere ein NiO-8YSZ (= NiO-Yttriumoxid (8 mol-%) stabilisiertes Zirkoniumdioxid) eingesetzt. Auf diesem wird der Elektrolyt (Schichtdicke ca. 5-30 µm), bestehend aus 8YSZ (= Yttriumoxid (8 mol-%) stabilisiertes Zirkoniumdioxid), aufgetragen. Als Kathodenmaterial (Schichtdicke ca. 10-100 µm) dient häufig das Perowskit LSM (= LaₓSr₁₋ₓMnO_{3-δ}) oder LSFC (= LaₓSr₁₋ₓFe_{y}Co_{1-y}O_{3-δ}) welche gegebenenfalls mit YSZ versetzt sind. Im letzteren Fall muss zwischen der 8YSZ-Elektrolytschicht und der LSCF-Kathodenschicht eine Diffusionsbarriereschicht eingebracht werden, um eine Reaktion zwischen diesen beiden Komponenten zu verhindern. Diese Diffusionsbarriereschicht (Schichtdicke 5-10µm) besteht üblicherweise aus Gadoliniumoxid dotiertem Ceriumoxid (CGO).

Unter einem Cermet (zusammengesetzt aus engl. *cer*amic und *met*al*)* sind Verbundwerkstoffe aus metallischen Werkstoffen in einer keramischen Matrix zu verstehen. Sie zeichnen sich regelmäßig durch eine besonders hohe Härte und Verschleißfestigkeit aus. Besonders vorteilhaft hat sich bislang die Kombination aus stabilisiertem Zirkoniumdioxid und metallischem Nickel herausgestellt, wobei das Nickel die elektrochemisch aktive Komponente ist. Bei der Herstellung des Substrats und der Anode wird häufig partikelförmiges Nickeloxid (NiO) als Ausgangsmaterial verwendet. Dieses wird bei der ersten Inbetriebnahme der Zelle zu metallischem Nickel reduziert. Nachteilig reoxidiert das Nickel, sobald auf der Brenngasseite Luft in die Zelle eindringt, etwa wenn der Stack im Betrieb an- bzw. abgefahren wird. Das Volumen des dabei entstehenden Nickeloxids ist größer als das ursprüngliche Volumen der im Ausgangszustand verwendeten NiO-Partikel. Dadurch kommt es zu Spannungen im Gefüge des Substrat- und Anodenmaterials, die sich in der Regel durch Bildung von Rissen abbauen. Auf Grund der hohen Spannungen kann auch der Elektrolyt reißen, wodurch die Brennstoffzelle unbrauchbar wird. Dieses Problem, auch bekannt unter dem Begriff Reoxidationsproblematik, tritt selbst dann auf, wenn der Elektrolyt herstellungsbedingt unter Druckeigenspannung steht.

Die Probleme durch die Reoxidation des Nickels ließen sich vermindern, indem an Stelle von Nickel ein anderes elektrisch leitfähiges Material, wie beispielsweise Kupfer oder eine elektrisch leitende Keramik, verwendet würde. Nachteilig ist es bislang noch nicht gelungen, eine echte Alternative zu Nickel zu finden. Maßgeblich für die Brauchbarkeit eines leitfähigen Materials in einer Brennstoffzelle sind neben der elektrischen Leitfähigkeit die katalytische Aktivität, die Beständigkeit unter reduzierenden Bedingungen und eine möglichst geringe Reaktivität mit anderen Komponenten der Brennstoffzelle.

Auf Grund der Vielzahl von Einzelzellen in einem SOFC-Stack steigt mit jeder defekten Einzelzelle das Risiko, dass der gesamte Stapel nicht die geforderte Gesamtleistung zeigt. Ferner können größere Defekte zu Brand oder letztlich zur kompletten Brennstoffzellenstapelzerstörung führen. Ein Verbau von fehlerhaften Einzelzellen, oder solchen, die die vorgegebenen Spezifikationen nicht erfüllen, führt somit zu einem erheblichen Risiko bei den Produktionskosten und ist kontraproduktiv bezüglich einer produktionsinhärenten Qualitätssicherung.

Aus der Literatur sind verschiedene Systeme bekannt, die eine Überprüfung des zusammengebauten Brennstoffzellenstapels ermöglichen. Dazu gehören Überwachungsverfahren der Wasserstoffleitungen eines Brennstoffzellensystems, die sowohl online arbeiten, als auch in bestimmten Intervallen durchgeführt werden können. Ferner werden Verfahren zur Überwachung von Strom- oder Spannungswerten einzelner Zellen als Überwachungssysteme beschrieben.

Bislang sind jedoch nur wenige Prüfmethoden bekannt, durch die einzelne Brennstoffzellen (SOFC) schon vor dem Zusammenbau zu einem Stack überprüft werden können. Dazu gehören einerseits die zerstörenden Prüfverfahren, wie z. B. mechanische Bruchtests. Diese werden in der Regel nur an Sonderbauformen, z. B. Plättchen, entsprechend der jeweiligen Prüfvorschriften oder in deren Anlehnung (3-Punkt-, 4-Punkt-, Doppelring-Biegeversuche, Hochleistungskeramik - Mechanische Eigenschaften monolithischer Keramik bei Raumtemperatur - Teil 1: Bestimmung der Biegefestigkeit; Deutsche Fassung EN 843-1:2006; Glas im Bauwesen - Bestimmung der Biegefestigkeit von Glas - Teil 5: Doppelring-Biegeversuch an plattenförmigen Proben mit kleinen Prüfflächen (ISO/DIS 1288-5:2007); Deutsche Fassung prEN ISO 1288-5:2007; Glas im Bauwesen - Bestimmung der Biegefestigkeit von Glas - Teil 5: Doppelring-Biegeversuch an plattenförmigen Proben mit kleinen Prüfflächen; Deutsche Fassung EN 1288-5:2000) durchgeführt. Nachteilig werden die Zellen dabei zerstört. Die Prüfung gibt somit nur Anhaltspunkte für die prinzipielle Eignung einer Herstellungsmethode, nicht aber eine Garantie für eine hergestellte Einzelzelle.

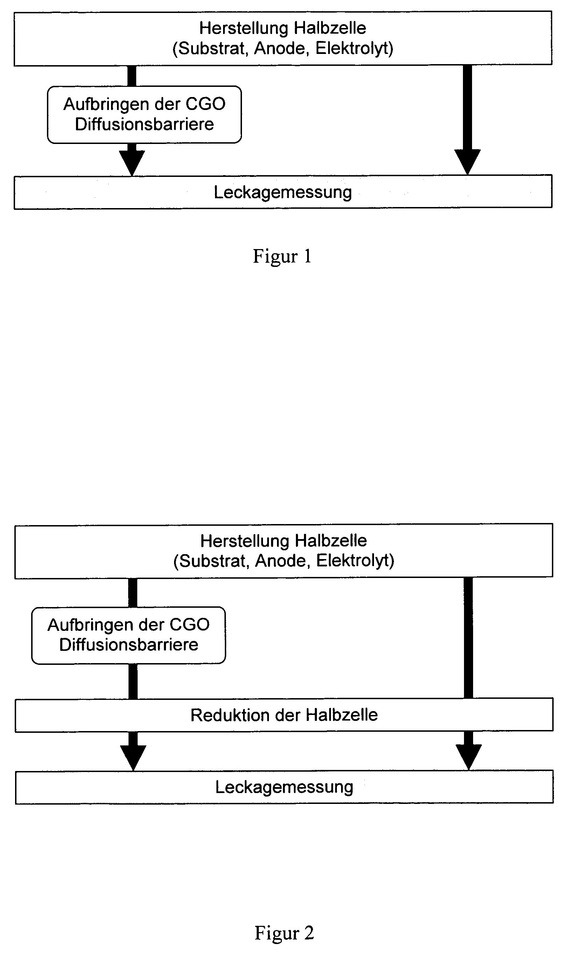

Andererseits sind Prüfungen an Halbzellen (Substrat, Anode, Elektrolyt) im endgesinterten, auf Maß geschnittenen Zustand auf die Leckage des Elektrolyten bekannt. Bei dieser Prüfung wird zunächst die Leckage der Halbzelle über den Elektrolyten gemessen (siehe Figur 1). Die Messung der Leckage kann in der Regel wie folgt durchgeführt werden: eine Halbzelle wird auf der Elektrolytoberfläche mittels einer flexiblen Dichtung gedichtet und anschließend auf der gedichteten Seite Vakuum gezogen. Nach Erreichen eines Grenzvakuums wird entweder Luft oder z. B. Helium auf die gegenüberliegende Seite gegeben und im ersten Fall der Druckanstieg auf der Vakuumseite über die Zeit aufgezeichnet und in zweitem Fall das diffundierende Helium auf der Vakuumseite mittels Massenspektrometrie gemessen. Bei bekannter Messfläche erhält man einen Leckdichtigkeitswert, bezogen auf die Druckdifferenz und die Zeit. In der Regel werden die auf diese Weise überprüfte Halbzellen jedoch nicht weiter für den Stackbau verwendet.

Die vorgenannte Messung der Leckage über den Elektrolyten führt jedoch in der Regel zu einem Messwert, der für die Funktionalität der SOFC eine im Prinzip falsche Bezugsgröße darstellt. Während dieser Messung liegen das Substrat und die Anode der SOFC wie während der Herstellung im oxidierten Zustand vor. Realistisch und damit wünschenswert wäre jedoch einen Messung im reduzierten Zustand, so wie die SOFC-Zellen unter Einsatzbedingungen später vorliegen.

Eine Änderung des Leckagewertes durch die Reduktion des üblicherweise eingesetzten anodenseitigen NiO zu Ni zu Beginn des Betriebs kann mittels dieser Messmethode (He-Lecktest oder Druckanstiegsmethode) nachteilig nicht erfasst werden. Erste Versuche zur Messung der Leckrate im oxidierten und reduzierten Zustand der Anode haben gezeigt, dass die Leckage durch die Reduktion typischerweise auf das 5 bis 50-fache ansteigt. Der Anstieg ist allerdings nicht reproduzierbar und somit nur tendenziell aussagekräftig. Deshalb kann diese Methode auch nicht sinnvoll eingesetzt werden, um beispielsweise jede 10. oder 20. Halbzelle einer Fertigung zu testen, da nur unzureichend vom singulären Messergebnis auf die Eigenschaft der restlichen Bauteile geschlossen werden kann.

Eine Alternative dazu ist eine anodenseitige Reduktion der Halbzeilen mit anschließender Leckagemessung (siehe Figur 2). Allerdings wurde bislang die vermessene Zelle selbst nicht in einem Brennstoffzellenstapel eingesetzt, weil die Halbzelle nach dem Prüfschritt mit einer Kathode beschichtet und anschließend oxidierend gesintert werden müsste. Hierbei würden das Substrat und die Anode erneut oxidiert werden, was, wie vorhergehend schon zum Thema Reoxidationsproblematik ausgeführt wurde, häufig zu einer Zerstörung der Zelle führt.

Somit lieferten die bisherigen Leckagemessungen nur stellvertretend für weitere, auf ähnlichem bzw. identischem Wege hergestellte Brennstoffzellen, die in einem Brennstoffzellenstapel eingebaut wurden, eine Aussage zur Dichtigkeit während des Betriebs dieses Brennstoffzellenstapels.

Eine alternative Sinterung einer mit einer üblichen Kathode beschichteten Halbzelle unter Inert- oder Vakuumbedingungen hat sich ebenfalls nicht bewährt, da hierdurch ebenfalls der Kathodenwerkstoff zerstört wird.

Kathoden unterliegen in einer Hochtemperatur-Brennstoffzelle vielen Anforderungen. Das Kathodenmaterial sollte deshalb eine hohe elektrische Leitfähigkeit und Schmelztemperatur aufweisen, der thermische Ausdehnungskoeffizient sollte an den des Festelektrolyten angepasst sein, das Material sollte eine gute Haftfestigkeit auf dem Festelektrolyten aufweisen, chemische Stabilität in Luft und oxidierenden Gasphasen zeigen, bis zur Betriebstemperatur phasenstabil sein, keine chemische Reaktion mit dem Festelektrolyten eingehen, eine hohe Sauerstoffpermeabilität aufweisen und zudem einen nur geringen Polarisationswiderstand in damit hergestellten Elektroden zeigen.

Unter diesen Bedingungen und den Rahmenbedingungen von Temperatur und Sauerstoffdruck erfüllen derzeit nur Edelmetalle wie Platin, Palladium und ihre Legierungen sowie eine Reihe von Mischoxiden diese Anforderungen. Am aussichtsreichsten sind Mischoxide vom Perowskittyp (ABO₃) und solche mit der der Perowskitstruktur verwandten K₂NiF₄-Struktur. Von diesen Mischoxiden wurden bislang die substituierten Manganite und Ferrite/Cobaltite am intensivsten untersucht und in Modellzellen sowie in Brennstoffzellenstacks auch praktisch im Langzeitbetrieb erprobt.

Aus den vorgenannten Gründen ergibt sich die Problematik, dass bislang keine vernünftigen aussagekräftigen Methoden existieren, um während der Herstellung eines Brennstoffzellenstapels in einem frühen Fertigungsstadium einige oder vorteilhaft sogar alle verwendeten Einzelzellen bezüglich ihrer elektrochemischen Funktionalität und Qualität zu testen, um so noch vor einem Einbau Informationen bezüglich ihrer Eignung zu erhalten.

DE 19626342 A1 beschreibt ein Leitfähigkeits- und Leckage-Prüfverfahren an einer reduzierten SOFC Anoden-Halbzelle.

### Aufgabe und Lösung der Erfindung

Aufgabe der Erfindung ist es, ein Verfahren bereit zu stellen, mit dessen Hilfe Festoxid-Brennstoffeinzelzellen (SOFC) zu einem Brennstoffzellenstapel derart zusammengebaut werden können, dass der Einbau von fehlerhaften Zellen oder Zellen, die diverse Spezifikationen nicht erfüllen, vorteilhaft unterbleibt.

Die Aufgabe der Erfindung wird gelöst durch ein Verfahren zur Herstellung eines Brennstoffzellenstapels gemäß Hauptanspruch. Vorteilhafte Ausgestaltungen des Verfahrens sind den jeweils darauf rückbezogenen Ansprüchen zu entnehmen.

### Gegenstand der Erfindung

Der Erfindung liegt ein zerstörungsfreies Verfahren zur Charakterisierung von Brennstoffeinzelzellen bezüglich der elektrochemischen Leistungsfähigkeit und/oder der Dichtigkeit des Elektrolyten zu Grunde, welches vorteilhaft direkt in den Herstellungsprozess zur Herstellung eines Brennstoffzellenstapels integriert werden kann. Der Vorteil des Verfahrens liegt einerseits in der Einsparung von Produktionskosten, da das Verfahren während des Herstellungsprozesses eines Brennstoffzellenstapels vor der endgültigen Fertigung der Zellen, d. h. an der so genannten Halbzeile erfolgt, und andererseits in einer erheblichen Einsparung von Kosten- und Arbeitsaufwand während der Stackmontage, da im wesentlichen überprüfte und für gut befundene Teile zum Einbau gelangen.

Die Erfindung sieht vor, Brennstoffeinzelzellen während der Zellherstellung im Zustand der Halbzelle einerseits auf Elektrolytdichtigkeit und/oder andererseits elektrochemisch zu testen. Besonders vorteilhaft kann es sein, beide Testmethoden kumulativ an einer Halbzelle anzuwenden.

Die Erfindung manifestiert sich in der ersten von zwei alternativen Ausführungsformen, die jeweils für sich Vorteile bieten. Die erste Variante liefert auf Grund der Überprüfung der Halbzelle im reduzierten Zustand einen direkten, realitätsnahen Messwert, muss dafür aber Einschränkungen bei der Auswahl des Kathodenwerkstoffes hinnehmen. Die zweite, nicht erfindungsgemäße Variante ist bei der Wahl des Kathodenmaterials nicht eingeschränkt, kann aber nur indirekte Aussagen treffen, da die Überprüfung im oxidierten Zustand der Halbzelle stattfindet.

Wesentliche Voraussetzung für die Erfindung ist es, einen Kathodenwerkstoff vorliegen zu haben, der keine hohen Sintertemperaturen (Tₛ) benötigt, um ausreichend leistungsfähig zu sein. Das bedeutet, dass der eingesetzte Kathodenwerkstoff eine Sintertemperatur unterhalb von 950 °C aufweist. Dadurch ist es möglich, die Untersuchungen der Leistungsfähigkeit und/oder der Leckdichtigkeit an der Halbzelle im reduzierten Zustand vornehmen zu können, ohne durch die sich anschließende oxidierende Sinterung der Kathode die Anode und das Substrat zu sehr zu beanspruchen.

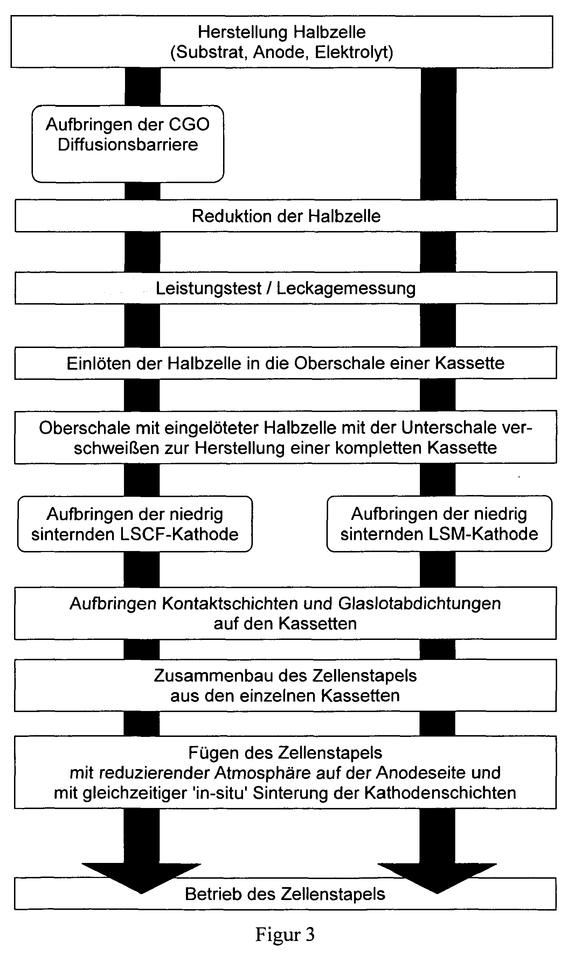

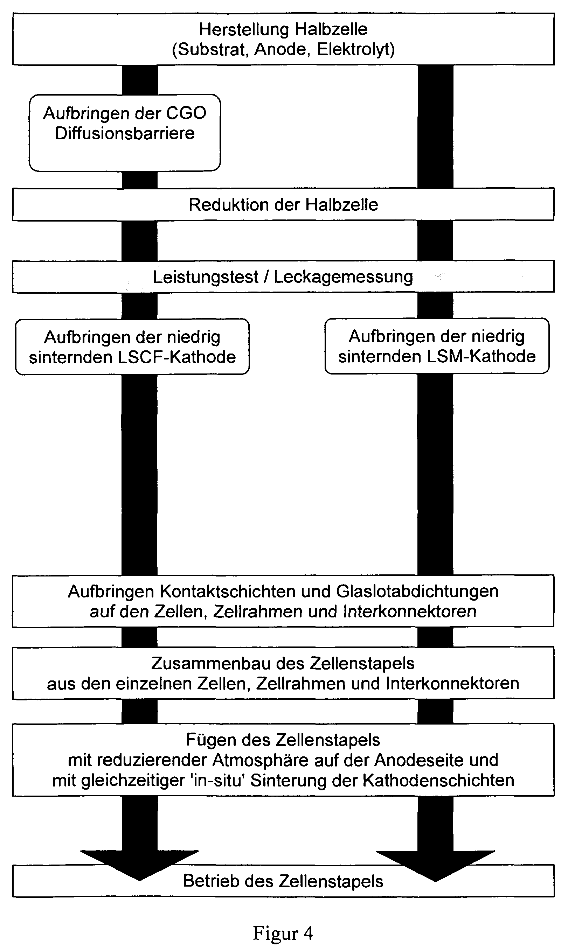

Die Abfolge einer Zellfertigung, der Überprüfung der hergestellten Zelle sowie des anschlie-ßenden Zusammenbaus eines Brennstoffzellenstapels (Stackbau) aus den überprüften Zellen sind erfindungsgemäß wie in den Figuren 3 und 4 dargestellt, und variieren leicht in Abhängigkeit vom gewählten Design und der Art der Überprüfung.

Die Erfindung dient insbesondere dazu, bei vorgegebenen Qualitätsanforderungen an die Einzelzellen im Vorfeld eines Zusammenbaus die zur Verfügung stehenden Einzelzellen darauf hin zu überprüfen, ob sie diesen vorgegebenen Qualitätsanforderungen genügen oder nicht. Auf diese Weise kann sichergestellt werden, dass letztlich nur positiv überprüfte, d. h. den vorgegebenen Qualitätsanforderungen genügende Einzelzellen in dem Stapel verbaut werden, um so eine verlässliche Qualität des gesamten Stapels zu gewährleisten.

Im Rahmen der Erfindung wird unter dem Begriff "Anode" sowohl eine Anode, als auch eine Kombination aus einem Anodensubstrat und wenigstens einer eigentlichen Anodenschicht verstanden. Ebenso umfasst der Begriff "Kathode" erfindungsgemäß sowohl eine Kathode, als auch eine Kombination aus einer Kathode und einer Stromsammlerschicht. Ferner sollen im Rahmen der Erfindung auch Ausgestaltungen mit so genannten Zwischenschichten bzw. Haftvermittlerschichten mit umfasst sein, auch wenn nicht jedes Mal explizit darauf hingewiesen wird.

Unter einem Cermet sind Verbundwerkstoffe aus keramischen Werkstoffen in einer metallischen Matrix zu verstehen. Ein typischerweise als Anode eingesetztes geeignetes Material ist 8YSZ und Ni, oder Ce₁₋ₓMeₓO₂ und Ni, mit Me = Erdalkali- oder Seltenerdmetall und 0 < x < 1.

Erfindungsgemäß erfolgt die Kathodensinterung bei Temperaturen unterhalb von 950 °C über mehrere Stunden. Vorteilhaft wird die Sinterung bei Temperaturen sogar unterhalb von 850 °C durchgeführt. Dies entspricht der Fügetemperatur aktueller Glaslote und hat bislang nicht zu negativen Auswirkungen auf die Metallbauteile geführt. Der eingesetzte Kathodenwerkstoff weist trotz der geringen Sintertemperatur eine gute Haftung zum Elektrolyten auf und zeigt bei Temperaturen von 800 °C eine Leistung von 1-2 A/cm² (abhängig von der Zusammensetzung und Stöchiometrie der Kathode).

Die niedrig sinternde Kathode (Tₛ < 950°C) kann beispielsweise aus La_{0,58}Sr_{0,4}Fe_{0,8}Co_{0,2}O₃ gebildet sein oder ähnliche Stöchiometrien (z. B. La_{0,6}Sr_{0,4}Fe_{0,8}Co_{0,2}O₃) aufweisen. Zwischen Elektrolyt und Kathode kann optional noch eine weitere Zwischenschicht, beispielsweise eine CeO₂-haltige Schicht, angeordnet sein. Die Zwischenschicht kann vorteilhaft unter Inertatmosphäre (oder moderates Vakuum) bei Tₛ zwischen 1150 und 1350 °C gesintert werden, oder über ein physikalisches Abscheidungsverfahren (Elektronenstrahlverdampfen, Sputtern), Elektrophorese oder chemische Gasphasenabscheidung ohne weitere Temperaturbehandlung erfolgen. Die Versinterung der Kathode kann vorteilhaft beim ersten Aufheizen der Brennstoffzelle bei deren Betrieb oder vor dem Einbau in einem separaten Prozessschritt erfolgen.

In einer nicht erfindungsgemäßen Variante wird auf die Überprüfung der Halbzelle im oxidierten Zustand zurückgegriffen. Hierbei wird lediglich ein Wert für die Leckdichtigkeit ermittelt, der zwar nicht direkt, aber doch indirekt eine Aussage über die Qualität der Halbzelle zulässt. Sofern das Ergebnis der Überprüfung gewissen Vorgaben entspricht, wird auch diese Halbzelle anschließend mit weiteren geprüften Halbzellen zu einem Brennstoffzellenstapel zusammengebaut.

Als Qualitätsanforderung könnte beispielsweise ein Wert von 2 x 10⁻⁵ hPa dm³ / s cm² im oxidierten Zustand der Anode mit Helium als Prüfgas genannt werden. Helium-Lecktester sind als komplette Prüfapparaturen erhältlich. Sofern entsprechende Qualitätsvorschriften vorhanden sind, können aber auch andere Prüfgase, wie beispielsweise Luft, eingesetzt werden.

Bei der Nennung von Qualitätsanforderungen für die Mindestzellleistung ist zu berücksichtigen, dass diese unter anderem durch den Kathodenwerkstoff bestimmt wird, der in diesem Zustand der Untersuchung noch nicht aufgebracht ist.

Als geeignete Größenordnung für die Mindestzellleistung könnte beispielsweise angegeben werden: für eine LSM Kathode: 1,3 A/cm² bei 800°C und 0,7 V; für einen LSCF Kathode: 1,7 A/cm² bei gleichen Bedingungen.

Diese Werte wurden beispielsweise für die Prüfung mit reinem Wasserstoff ermittelt. Im Produktionsprozess wird in der Regel jedoch Formiergas verwendet, welches bei sonst identischen Rahmenbedingungen zu deutlich niedrigeren Werten führen sollte.

Erfindungsgemäß werden die Untersuchungen an den Halbzellen während des eigentlichen Herstellungsprozesses durchgeführt. Idealerweise sollten die hergestellten Halbzellen auf dem Produktionsband verbleiben, bzw. würden nur kurzfristig für die Untersuchungen umgesetzt werden. Bei den Untersuchungen in reduziertem Zustand könnten die Halbzellen beispielsweise zunächst einem Reduktions-Durchlaufofen durchlaufen und anschließend in die entsprechenden Teststände zur Überprüfung der Leckdichtigkeit und/oder der Zellleistung umgesetzt werden.

Die Überprüfung der Zellleistung der Halbzelle könnte aber vorteilhaft auch direkt auf dem Produktionsband vorgenommen werden. Insbesondere könnte ein Roboter vorgesehen werden, der die Halbzellen für die Untersuchungen entsprechend auf den Kopf legt, sofern dies benötigt wird.

Für die elektrochemische Untersuchung wird die Halbzelle mit einer temporären Hilfselektroden kontaktiert. Solche Hilfselektroden können beispielsweise aus einem Platinnetz bestehen, welche temporär für die Stromabnahme zur Messung der Zellspannung auf die Halbzelle gepresst und anschließend wieder entfernt werden.

Die Halbzelle kann z. B. direkt in einem Ofen unter reduzierende Bedingungen gesetzt werden und wird dadurch reduziert. Alternativ kann nach dem Sinterprozess des Elektrolyten die Probe durch einen speziellen Ofen transportiert werden oder die Halbzelle wird unter eine spezielle Haube gesetzt und anodenseitig reduziert.

Die Reduktion selbst kann sowohl mit reinem H₂ als auch mit Gemischen aus H₂ und Inertgas (Ar, N₂) durchgeführt werden. Die Dauer der Reduktion hängt ab von a) der Menge an Nickel im Substrat und der Anode, b) der Menge an H₂, die zugeführt wird und c) der Temperatur. Alle drei Parameter sind jeweils vorher auf die spezifische Zelle anzupassen.

Wenn der Ofen anodenseitig gut nach Außen und zur Luftseite abgedichtet ist, kann man auf eine Haube verzichten. Für den Fall, dass z. B. gleichzeitig mehrere Zellen untersucht werden sollen, kann es von Vorteil sein, jeweils eine Haube über die Halbzellen zu platzieren, um Fehlgase zu vermeiden. Außerdem würde eine kleine Haube den Vorteil haben, dass nur wenig Gas benötigt wird.

Die Messung selbst sollte unter erhöhten Temperaturen erfolgen, das bedeutet beispielsweise innerhalb des Ofens. Idealerweise sind die Kontaktierungen der Anodenseite geschickt in die Haube integriert, so dass mit dem Aufsetzen der Haube auf die Halbzelle gleichzeitig die Kontaktierung erfolgt.

### Spezieller Beschreibungsteil

Nachfolgend wird die Erfindung anhand von Figuren und Ausführungsbeispielen näher erläutert, ohne dass dadurch eine Einschränkung des Gegenstandes der Erfindung gesehen werden soll. Der Zusammenbau eines Brennstoffzellenstapels aus den Einzelzellen ist einem Fachmann geläufig. Die nachfolgenden Ausführungen sollen daher insbesondere den Teil der qualitativen Überprüfungen der Halbzellen innerhalb des Gesamtprozesses der Herstellung eines Brennstoffzellenstapels verdeutlichen.
- Figur 1:: Schematische Überprüfung der Leckrate gemäß dem Stand der Technik an einer Halbzelle mit im oxidierten Zustand vorliegender Anode (Variante 2). Die dadurch gewonnenen Ergebnisse sind jedoch streng genommen nicht repräsentativ für eine im Betrieb befindliche Einzelzelle und somit in reduziertem Zustand vorliegende Anode.
- Figur 2:: Schematische Überprüfung der Leckrate gemäß dem Stand der Technik an einer Halbzelle mit im reduzierten Zustand vorliegender Anode (Variante 1). Die Ergebnisse spiegeln die Bedingungen einer im Betrieb befindlichen Zelle wieder. Diese Halbzelle kann bei Verwendung einer Kathode gemäß dem Stand der Technik auf Grund der hohen Temperaturen und oxidierenden Bedingungen jedoch nicht im Brennstoffzellenstapel verbaut werden, da dieser Prozessschritt regelmäßig zur Zerstörung der Anode, bzw. des Substrates führt.
- Figur 3:: Erfindungsgemäße schematische Zellfertigung / Stackbau "Kassetten-Design" mit Überprüfung der Leistung und der Leckage.
- Figur 4:: Erfindungsgemäße schematische Zellfertigung / Stackbau "Stationär-Design" mit Einlegerahmen mit Überprüfung der Leckage und der Leistung.
- Figur 5:: Schematischer Aufbau der erfindungsgemäßen Messung für die Bestimmung der Leckrate der Halbzelle mit in reduziertem Zustand vorliegender Anode.
- Figur 6:: Schematischer Aufbau der erfindungsgemäßen Messung für die Bestimmung der offenen Klemm(Zell-)spannung (OCV = Open Circuit Voltage) und elektrochemische Leistungsfähigkeit der Halbzelle mit in reduziertem Zustand vorliegender Anode.

Für die Zellfertigung und Stackbau im "Kassetten-Design" mit zwischenzeitlicher Überprüfung der elektrochemischen Leistungsfähigkeit der Zellen nach Variante 1 (siehe Figur 3) sind die Schritte beispielsweise wie folgt:
- Herstellung einer Halbzelle umfassend Substrat, Anode und Elektrolyt
- optional bei späterer Verwendung von LSCF-Kathoden: Aufbringen der CGO-Diffusionsbarriere
- Reduktion von Substrat und Anode
- Test auf Elektrolytleckage und/oder Test auf elektrochemische Leistungsfähigkeit und damit indirekt auf Elektrolytleckage
- Einlöten der Halbzelle in der Oberschale einer Kassette
- Verschweißen der Oberschale mit eingelöteter Halbzelle mit der Unterschale zur Herstellung einer kompletten Kassette
- Kathodenbeschichtung (thermische Behandlung bei niedrigen Temperaturen (unterhalb von 950 °C) zur Anhaftung der Kathode am Elektrolyten, ohne andere Stackbauteile zu schädigen)
- Aufbringen von Kontaktschichten und Glaslotabdichtungen auf den Kassetten
- Zusammenbau des Zellenstapels aus den einzelnen Kassetten
- Fügen des Zellenstapels mit reduzierender Atmosphäre auf der Anodenseite und mit gleichzeitiger'in-situ' Sinterung der Kathodenschichten
- Verwendung des Brennstoffzellestapels im System und Betrieb desselben.

### Ausführungsbeispiel 1 für Variante 1: Elektrolyt-Leckdichtigkeit

- Herstellung eines Anodensubstrats, bestehend aus NiO und 8YSZ über Warmpressen oder Foliengießen;
- Vorsinterung des Substrats (z. B. 1230 °C);
- Substratbeschichtung mit einer NiO/8YSZ Anode und einem 8YSZ-Elektrolyten über Vakuumschlickerguss (alternativ wären auch Siebdruck oder Rollbeschichtung möglich);
- Sinterung der Einheit zur Gasdichtigkeit des Elektrolyten (z. B. 1400 °C);
- Konfektionierung der Halbzelle (auf Maß schneiden);
- Messung der Elektrolytleckage, Freigabe zur Weiterprozessierung oder Verwerfen des Bauteils;
- Beschichtung der Zwischenschicht mit Ce_{0.8}Gd_{0.2}O_{2-δ} über Siebdruck und Sinterung der Zwischenschicht bei 1250 °C;
- Beschichtung mit LSFC-Kathode über Siebdruck und Trocknung; anschließend erfolgt entweder die Überprüfung im Einzelzellmessstand (zur elektrochemischen Charakterisierung des gesamten Zellaufbaus; die Messung dient zur nachträglichen ex-situ Charakterisierung der Zellfertigung) oder der Verbau im Stack.

### Ausführungsbeispiel 2 für Variante 1: Elektrochemie und Leistungsfähigkeit

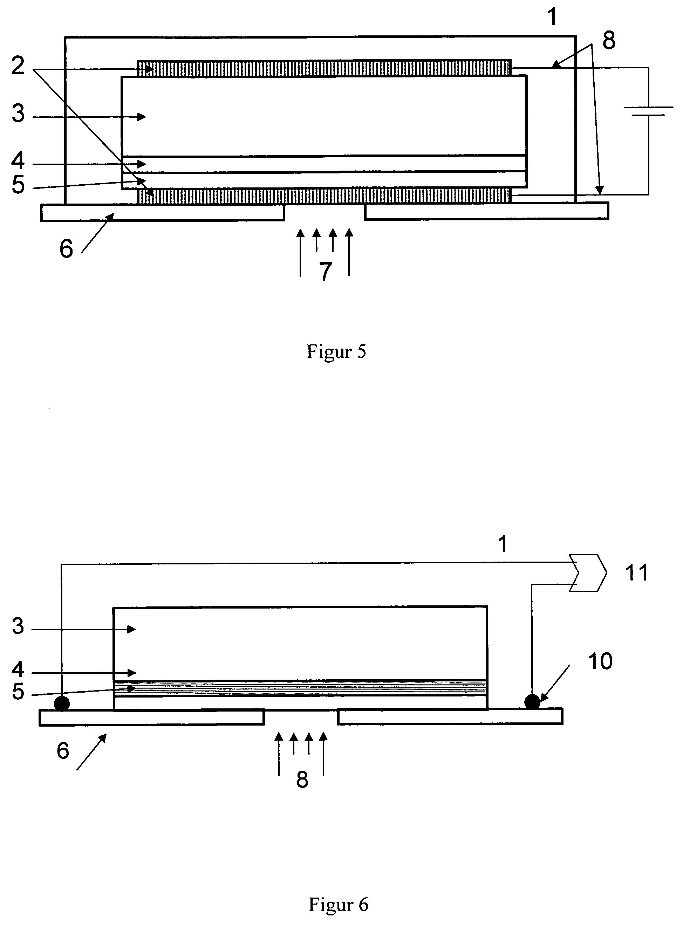

Die Messanordnung für eine solche Überprüfung ist in Figur 5 dargestellt. Eine Halbzelle umfassend ein Substrat (3) aus NiO/8YSZ (300 - 1500 µm), einer darauf aufgebrachten Anodenschicht (4) aus ebenfalls NiO/8YSZ (7 µm) sowie einer darauf befindlichen Elektrolytschicht (5) aus 8YSZ (10 µm) wird einer erfindungsgemäßen Überprüfung unterzogen.

Dazu wird die Halbzelle kurze Zeit (3 bis 5 Stunden) auf Temperaturen von mindestens 600 °C und maximal 900 °C unter einer reduzierenden Wasserstoff-Atmosphäre aufgeheizt (beispielsweise in einem Durchlaufofen) zur Reduktion der Anodenseite. Die Halbzelle mit reduzierter Anode wird entsprechend der Figur 5 auf eine Transportauflage (6) gelegt (vorteilhaft direkt anschließend an den Reduktions-Durchlaufofen), und beiderseits mit einem Platinnetz (2) kontaktiert. Alternativ wäre auch ein Gold- oder Silbernetz geeignet, für die Anodenseite gegebenenfalls auch ein Nickelnetz.

Die Anodenseite wird unter eine Haube (1) mit moderater H₂- Atmosphäre (z. B. 3 % H₂ in N₂ oder Ar) beaufschlagt und kurzfristig auf mindestens 600 °C und maximal 700 °C aufgeheizt (z. B. in einem Durchlaufofen). Währenddessen wird die Halbzelle entsprechend einer üblichen Kennlinienmessung galvanostatisch vermessen, wobei die Platinnetze (2) dazu über eine Kontaktierung (8) nach Außen verfügen.

Anstelle der Aufnahme der gesamten Kennlinie, d. h. bei der eine Stromdichte von Null bis ca. 2 A/cm² aufgegeben werden, können alternativ auch nur einige "Stromdichtepunkte" (z. B. in Schritten von 0,2 A/cm²) angefahren werden. Die ermittelte Kennlinie oder die Kennlinienpunkte geben nun Antworten auf zwei Fragen:
1) Entspricht die offene Zellspannung (OCV) dem theoretischen, nach Nernst-Gleichung zu berechnendem, Wert, d. h. ist der Elektrolyt gasdicht unter den gewählten Gasbedingungen (die Nernst-Gleichung ist abhängig von den Sauerstoffpartialdrücken der beiden Elektrodenseiten; incl. des Wasserdampfpartialdrucks auf der Anodenseite)
2) Ist der Zellwiderstand entsprechend der vorgegebenen Qualitätssicherungswerte (z. B. LSM-Doppelkathode: 0,40 ± 0,10 Ω•cm², LSFC-Kathode:0,24 ± 0,05 Ω•cm² bei 700°C und 0,7V).

Entspricht einer der beiden Parameter oder beide nicht den Anforderungen kann die Zelle vorteilhaft zu diesem frühen Fertigungszeitpunkt ausgeschleust werden und gegebenenfalls nachuntersucht werden. Wenn beide Parameter in Ordnung sind wird die Zelle direkt weiterprozessiert.

### Ausführungsbeispiel 3 für Variante 1: Leckagemessung

Diese Ausgestaltung der Überprüfung ermöglicht die Prüfung der Leckdichtigkeit des Elektrolyten und nicht der elektrochemischen Leistungsfähigkeit der Zelle. Dieser Nachteil wird durch den Vorteil, dass die Messung bei Raumtemperatur erfolgen kann, ausgeglichen. Welche der beiden Methoden während der SOFC-Fertigung zum Einsatz kommt hängt unter anderem davon ab, wie gut qualitätsgesichert die einzelnen Fertigungsschritte sind, wie hoch die Reproduzierbarkeit der Fertigungsqualität ist und ob beispielsweise eine Kathode zur Verfügung steht, die keine hohe Sintertemperatur benötigt, da die Prüfung der Zelle entweder im oxidierten oder reduzierten Zustand der Halbzeile erfolgen kann.

Bei der Messung der Dichtigkeit der Halbzelle im reduzierten Zustand, erhält man den für die Funktionalität sinnvollen Leckagewert, benötigt aber eine Kathode mit niedriger Sintertemperatur, d. h. mit einer Sintertemperatur, die regelmäßig unterhalb von 950 °C liegt.

Der Testaufbau kann entsprechend der Figur 6 gewählt werden. Eine Halbzelle umfassend ein Substrat (3) aus NiO/8YSZ (300 - 1500 µm), einer darauf aufgebrachten Anodenschicht (4) aus ebenfalls NiO/8YSZ (7 µm) sowie einer darauf befindlichen Elektrolytschicht (5) aus 8YSZ (10 µm) wird nach oben hin mit einer Haube (1) versehen, welche zum Transportband (6) mittels Gummidichtung (10) abgedichtet ist. He (8) wird von unten, gegen den Elektrolyten, aufgegeben. Um das Substrat umlaufend befindet sich ein oder mehrere He-Detektor/en, die an einen He-Lecktester mit Massenspektrometer (11) angeschlossen ist/sind. He-Lecktestapparaturen sind bereits kommerziell verfügbar. Der He-Massenfluss kann direkt in eine Leckrate in hPa dm³/cm² s umgerechnet werden. Das bedeutet, dass man bei bekannter Druckdifferenz zwischen den Elektrodenseiten und bekannter Messfläche auf der Elektrolytseite sofort die Leckdichte des Elektrolyten erhält. Auf der Basis dieses Wertes kann die Zelle verworfen oder weiterprozessiert werden.

Alternativ zum Einsatz eines He-Lecktesters kann auch mit der so genannten Druckanstiegsmethode die Leckdichtigkeit überprüft werden. Hierbei wird anstelle des He-Gases auf der Elektrolytseite ein Unterdruck angelegt und die Zeit ermittelt, die die Luft benötigt, um von der Anodenseite durch den Elektrolyten zur Elektrolytseite zu diffundieren und den Druckunterschied auszugleichen. Bestimmt wird in der Regel die Zeit, die benötigt wird, um eine vorgegebene Druckdifferenz zu erreichen. Eine angeschlossene Computersteuerung kann diesen Zeitwert und die Druckdifferenz bei bekannter Messfläche ebenfalls sofort in eine Leckrate umrechnen.

### Ausführungsbeispiel 4 für Variante 2: Leckagemessung

Die Ausführung entspricht bis auf die Reduzierung der Anode und dem später gewählten Kathodenmaterial sowie dazu entsprechenden Sintertemperaturen dem Ausführungsbeispiel 3.

Die Variante der Überprüfung einer Halbzelle, mit reduzierter Anode, kann in ihren jeweiligen Ausführungsformen vorteilhaft in eine Zellfertigung integriert werden und somit erfindungsgemäß die SOFC-Serienproduktion mit hundertprozentiger, zerstörungsfreier Bauteilprüfung ermöglichen. Die erfindungsgemäßen Verfahren dienen somit der zerstörensfreien Qualitätskontrolle während der Herstellung einzelner Brennstoffzellen für einen Brennstoffzellenstapel.

## Patentansprüche

1. Verfahren zur Herstellung eines Brennstoffzellenstapels mit den Schritten:
a) eine erste Halbzelle umfassend ein Substrat, eine darauf angeordnete Anode sowie ein auf der Anode angeordneter Elektrolyt wird hergestellt,
b) die Halbzelle wird reduziert,
c) für die erste reduzierte Halbzelle wird ein Wert für die Leckdichtigkeit des Elektrolyten oder ein Wert für den Zellwiderstand ermittelt,
d) sofern der ermittelte Wert für die Leckdichtigkeit des Elektrolyten und/oder der Wert für den Zellwiderstand einer vorgegebenen Qualitätsanforderung genügt wird die erste Halbzelle anschließend mit einer Kathode beschichtet,
e) die so hergestellte erste Brennstoffzelle wird zusammen mit wenigstens einer weiteren Brennstoffzelle in einen Brennstoffzellenstapel eingebaut, wobei die Kathode der ersten Brennstoffzelle beim ersten Anfahren des Stacks "in-situ" gesintert wird,
e) wobei ein Kathodenmaterial mit einer Sintertemperatur (Tₛ) unterhalb von 950 °C eingesetzt wird,
f) wobei der Einbau der weiteren Brennstoffzellen in den Brennstoffzellenstapel nur erfolgt, sofern der ermittelte Wert für die Leckdichtigkeit des Elektrolyten und/oder der Wert für den Zellwiderstand auch dieser weiteren Brennstoffzelle einer vorgegebenen Qualitätsanforderung genügt.

2. Verfahren nach Anspruch 1, bei dem der Wert für die Leckdichtigkeit des Elektrolyten über eine Leckdichtigkeitsmessung erfolgt.

3. Verfahren nach einem der Ansprüche 1 bis 2, bei dem die Ermittlung der Leckdichtigkeit des Elektrolyten bei Temperaturen zwischen 500 und 1000 °C erfolgt, insbesondere zwischen 600 und 850 °C.

4. Verfahren nach einem der Ansprüche 1 bis 3, bei dem für die erste Brennstoffzelle ein Kathodenmaterial mit einer Sintertemperatur (Tₛ) unterhalb von 850 °C eingesetzt wird.

5. Verfahren nach Anspruch 1, bei dem Wert für die Elektrolytdichtigkeit dadurch ermittelt wird, dass die erste Halbzelle elektrisch kontaktiert wird, und eine elektrochemische Bestimmung der offenen Klemmspannung der Zelle erfolgt.

6. Verfahren nach Anspruch 5, bei dem der Wert für den Zellwiderstand über eine elektrochemische Strom/Spannungsmessung bestimmt wird.

7. Verfahren nach Anspruch 1 bis 6 bei dem sowohl ein Wert für die Leckdichtigkeit des Elektrolyten als auch ein Wert für den Zellwiderstand ermittelt wird.

8. Verfahren nach einem der Ansprüche 1 bis 7, bei dem für die erste Halbzelle eine Anode aus einem nickelhaltigen Cermet eingesetzt wird.

9. Verfahren nach einem der Ansprüche 1 bis 8, bei dem die überprüfte erste Brennstoffzelle in eine Kassette eingefügt wird und mehrere Kassetten zu einem Brennstoffzellenstapel verbunden werden.

10. Verfahren nach einem der Ansprüche 1 bis 9, bei dem die überprüfte erste Brennstoffzelle in einem Rahmen in den Brennstoffzellenstapel eingebaut wird.

11. Verfahren nach einem der Ansprüche 1 bis 10, bei dem die Halbzelle zur Reduktion der Anodenseite unter einer reduzierenden Wasserstoff-Atmosphäre aufgeheizt wird.

## Claims

1. Method for making a fuel cell stack comprising the steps:
a) a first half cell is manufactured comprising a substrate, an anode arranged thereon and an electrolyte arranged on the anode,
b) the half cell is reduced,
c) a value for the leaktightness of the electrolyte or a value for the cell resistance is determined for the first reduced half cell,
d) if the determined value for the leaktightness of the electrolyte and/or the value for the cell resistance satisfies a predetermined quality requirement the first half cell is subsequently coated with a cathode,
e) the first fuel cell manufactured in this way is built into a fuel cell stack together with at least one further fuel cell, wherein the cathode of the first fuel cell is sintered "in situ" the first time the stack is started up,
e) wherein a cathode material with a sintering temperature (Tₛ) below 950 °C is used,
f) wherein the installation of the further fuel cells in the fuel cell stack only takes place if the determined value for the leaktightness of the electrolyte and/or the value for the cell resistance of this further fuel cell also satisfies a predetermined quality requirement.

2. Method according to claim 1, wherein the value for the leaktightness of the electrolyte is determined by means of a leaktightness measurement.

3. Method according to one of the claims 1 to 2, wherein the determination of the leaktightness of the electrolyte takes place at temperatures between 500 and 1000 °C, in particular between 600 and 850 °C.

4. Method according to one of the claims 1 to 3, wherein a cathode material with a sintering temperature (Tₛ) below 850 °C is used for the first fuel cell.

5. Method according to claim 1, wherein the value for the electrolyte tightness is determined in that the first half cell is electrically contacted and an electrochemical determination of the open terminal voltage of the cell takes place.

6. Method according to claim 5, wherein the value for the cell resistance is determined by means of an electrochemical current/voltage measurement.

7. Method according to claim 1 to 6, wherein both a value for the leaktightness of the electrolyte as well as a value for the cell resistance is determined.

8. Method according to one of the claims 1 to 7, wherein an anode consisting of a nickel-containing cermet is used for the first half cell.

9. Method according to one of the claims 1 to 8, wherein the tested first fuel cell is inserted into a cassette and several cassettes are combined to form a fuel cell stack.

10. Method according to one of the claims 1 to 9, wherein the tested first fuel cell is installed in a frame in the fuel cell stack.

11. Method according to one of the claims 1 to 10, wherein the half cell is heated under a reduced hydrogen atmosphere in order to reduce the anode side.

## Revendications

1. Procédé servant à fabriquer un empilement de piles à combustible, comprenant les étapes suivantes:
a) une première demi-pile comprenant un substrat, une anode disposée sur celui-ci ainsi qu'un électrolyte disposé sur l'anode est fabriquée;
b) la demi-pile est réduite;
c) pour la première demi-pile réduite, une valeur pour l'étanchéité aux fuites de l'électrolyte ou une valeur pour la résistance de pile est déterminée;
d) immédiatement après la première demi-pile est revêtue d'une cathode dans la mesure où la valeur déterminée pour l'étanchéité aux fuites de l'électrolyte et/ou la valeur pour la résistance de pile répond à un critère spécifié en matière de qualité ;
e) la première pile à combustible ainsi fabriquée est installée conjointement avec au moins une autre pile à combustible dans un empilement de piles à combustible, sachant que la cathode de la première pile à combustible est frittée sur place lors de la première mise en route de la pile;
e) sachant qu'un matériau de cathode présentant une température de frittage (Tₛ) inférieure à 950 °C est utilisé,
f) sachant que l'installation des autres piles à combustible est effectuée dans l'empilement de piles à combustible seulement dans la mesure où la valeur déterminée pour l'étanchéité aux fuites de l'électrolyte et/ou la valeur pour la résistance de pile également de ladite autre pile à combustible répondent à un critère spécifié en matière de qualité.

2. Procédé selon la revendication 1, dans le cadre duquel la valeur pour l'étanchéité aux fuites de l'électrolyte est déterminée par l'intermédiaire d'une mesure de l'étanchéité aux fuites.

3. Procédé selon l'une quelconque des revendications 1 à 2, dans le cadre duquel la détermination de l'étanchéité aux fuites de l'électrolyte est effectuée à des températures comprises entre 500 et 1 000 °C, en particulier comprises entre 600 et 850 °C.

4. Procédé selon l'une quelconque des revendications 1 à 3, dans le cadre duquel un matériau de cathode présentant une température de frittage (Tₛ) inférieure à 850 °C est utilisé pour la première pile à combustible.

5. Procédé selon la revendication 1, dans le cadre duquel la valeur de l'étanchéité de l'électrolyte est déterminée en ce que la première demi-pile est mise en contact électrique, et dans le cadre duquel une définition électrochimique de la tension de blocage ouverte de la pile est effectuée.

6. Procédé selon la revendication 5, dans le cadre duquel la valeur pour la résistance de pile est définie par l'intermédiaire d'une mesure de courant/de tension électrochimique.

7. Procédé selon la revendication 1 à 6, dans le cadre duquel aussi bien une valeur pour l'étanchéité aux fuites de l'électrolyte qu'une valeur pour la résistance de pile sont déterminées.

8. Procédé selon l'une quelconque des revendications 1 à 7, dans le cadre duquel une anode composée d'un cermet contenant du nickel est utilisée pour la première demi-pile.

9. Procédé selon l'une quelconque des revendications 1 à 8, dans le cadre duquel la première pile à combustible vérifiée est insérée dans une cassette, et dans le cadre duquel plusieurs cassettes sont assemblées pour former un empilement de piles à combustible.

10. Procédé selon l'une quelconque des revendications 1 à 9, dans le cadre duquel la première pile à combustible vérifiée est installée dans un châssis dans l'empilement de piles à combustible.

11. Procédé selon l'une quelconque des revendications 1 à 10, dans le cadre duquel la demi-pile est réchauffée sous atmosphère hydrogénée de réduction afin de réduire le côté d'anode.
